Europäisches Patentamt

European Patent Office

Office européen des brevets

(11) Veröffentlichungsnummer: **0 154 952**
**A2**

# (12) EUROPÄISCHE PATENTANMELDUNG

(21) Anmeldenummer: **85102688.0**

(22) Anmeldetag: **09.03.85**

(51) Int. Cl.⁴: **B 01 D 35/14**

(30) Priorität: **16.03.84 DE 3409697**

(43) Veröffentlichungstag der Anmeldung: **18.09.85**
**Patentblatt 85/38**

(84) Benannte Vertragsstaaten: **AT BE CH DE FR GB IT LI LU NL SE**

(71) Anmelder: **ARGO G.M.B.H. für Feinmechanik,
D-7527 Kraichtal-Menzingen (DE)**

(72) Erfinder: **Reinhardt, Hans, Hans-Sachs-Strasse 64,
D-7518 Bretten (DE)**

(74) Vertreter: **Hoeger, Stellrecht & Partner,
Uhlandstrasse 14c, D-7000 Stuttgart 1 (DE)**

(54) **Filter.**

(57) Um bei einem Filter mit einem Gehäuse mit einem Zufluss und einem Abfluss für ein zu filterndes Medium, mit einem Filtereinsatz, der den Innenraum des Gehäuses in zwei Teilräume unterteilt, dessen erster mit dem Zufluss und dessen zweiter mit dem Abfluss in Verbindung steht, und mit einem verschieblich gelagerten Ventilkörper, der einerseits von dem Medium im ersten Teilraum und andererseits von dem Medium im zweiten Teilraum beaufschlagbar ist und beim Überschreiten eines bestimmten Differenzdruckes der Medien in den beiden Teilräumen gegen die Wirkung eines elastischen Kraftspeichers aus einer Ausgangsstellung heraus verschiebbar ist, einen zu hohen Differenzdruck zwischen erstem und zweitem Teilraum zu verhindern, wird vorgeschlagen, dass dem Ventilkörper ein Ventilsitz zugeordnet ist, der sich im Strömungsweg vom zweiten Teilraum zum Abfluss befindet, und dass der Ventilkörper in der Ausgangsstellung von dem Ventilsitz abgehoben ist, während er bei Steigerung des Differenzdrucks der Medien in den beiden Teilräumen gegen diesen verschoben wird.

*1*

---

B e s c h r e i b u n g

Filter

Die Erfindung betrifft ein  Filter mit den im Oberbegriff
des Anspruches 1 angegebenen Merkmalen.

Üblicherweise sind Filter, insbesondere Filter für Hydrauliköl, mit einem Bypassventil versehen, das bei einem vorgegebenen Differenzdruck zwischen dem zuströmenden Medium
und dem aus dem Filter abströmenden Medium öffnet. Bei geöffnetem Bypassventil fließt mindestens ein Teil des zuströmenden Mediums von der Zuflußseite durch das Bypassventil hindurch direkt zur Abflußseite. Dieses Medium wird also bei dem Durchgang durch das Filterelement nicht gereinigt, d.h. dem Verbraucher wird teilweise ungereinigtes Filtermedium zugeführt. Dies kann zu Schädigungen oder fehlerhaftem Arbeiten eines von dem Medium betriebenen nachgeschalteten Gerätes führen.

2

Die Bypassventile haben bei dieser Art von Ventilen die Aufgabe, den am Filterelement wirkenden Differenzdruck zu begrenzen. Diese Begrenzung ist insbesondere deshalb erforderlich, weil der Druckabfall sich mit zunehmender Verschmutzung des Filterelementes erhöht. Außerdem ist der Druckabfall am Filterelement etwa proportional zur kinematischen
Viskosität des jeweiligen Mediums. Wenn beispielsweise eine
Hydraulikanlage bei tiefen Temperaturen in Betrieb genommen
wird, hat das Hydraulikmedium eine sehr hohe Viskosität, und
in der Folge würde eine entsprechend hohe Differenzdruckbelastung auf das Filterelement wirken, wenn keine Begrenzung,
z.B. durch ein Bypassventil, vorgesehen würde.

Bei Verwendung sehr schmutzempfindlicher Hydraulikkomponenten, z.B. elektrohydraulischen Servoventilen oder hydrostatischen Lagerungen, darf das vorgeschaltete Filter kein Bypassventil aufweisen. Hier müssen also Filterelemente verwendet werden, die ohne Schaden zu nehmen dem vollen Systemdruck ausgesetzt werden können. Da der Systemdruck in modernen Hydraulikanlagen 300 bis 400 bar betragen kann, ist der
entsprechende Aufwand zur Herstellung entsprechend stabiler
Filterelemente außerordentlich groß. Bei Filtern mit Bypasselementen beträgt der Ventil-Ansprechdruck üblicherweise 2
bis 7 bar, weshalb bei diesen Konstruktionen ein Versagensdruck der Filterelemente von ca. 5 bis 20 bar ausreicht.

Aus  der Tatsache, daß bei Filtern ohne Bypassventil
der auf das Filter wirkende Differenzdruck um den Faktor
20 bis 100 höher sein kann als bei Filtern mit Bypassventil, resultiert die Notwendigkeit, alle belasteten Bauteile
entsprechend stabil auszuführen. Hinzu kommt, daß es außerordentlich schwierig ist, die eigentliche Filterschicht (z.B.
Filterpapier oder Vlieswerkstoff) so wirkungsvoll abzustützen, daß sie bei hohen Differenzdrücken nicht reißt. Selbst
wenn dieses Problem beherrscht wird, muß davon ausgegangen
werden, daß die Wirkung des Filters nachläßt, wenn ein hoher Differenzdruck auf das Filterelement einwirkt. Unter
diesen Bedingungen werden bestimmte Schmutzpartikel, die
bei niedrigem Differenzdruck in der Filterschicht zurückgehalten werden, aufgrund der hohen wirksamen Kräfte durch
die Filterschicht hindurchgepreßt.

Zur Vermeidung der zuvor beschriebenen Nachteile ist aus dem
deutschen Gebrauchsmuster 7 009 510 ein Filter bekannt, bei
dem anstelle des üblichen Bypassventils ein Differenzdruckventil vorgesehen ist, durch das bei einem vorbestimmten
Druckabfall ein separater Ausgang am Filter freigegeben wird.
Durch diesen wird das ungereinigte Medium einem Vorratsbehälter zugeführt. Dabei ist nachteilig, daß eine zusätzliche
Leitung vorgesehen werden muß, die zudem noch eine große
Nennweite aufweisen muß, damit der Druckabfall in einer solchen Leitung nicht zu groß wird. Dies ist wichtig, weil sonst
durch den Staudruck in dieser Leitung eine Überbelastung des
Filterelementes entstehen könnte.

Der Erfindung liegt somit die Aufgabe zugrunde, bei einem
gattungsgemäßen Filter das Auftreten hoher Druckdifferenzen
am Filterelement zu vermeiden, ohne daß eine separate Rück-

4

---

führleitung für das ungereinigte Medium notwendig ist.

Diese Aufgabe wird bei einem Filter der eingangs beschriebenen Art erfindungsgemäß durch die kennzeichnenden Merkmale des Anspruches 1 gelöst. Durch das Differenzdruckventil wird also die Verbindung des zweiten Teilraumes zum Abfluß gedrosselt bzw. verschlossen, so daß sich im zweiten Teilraum ein erhöhter Druck aufbaut, der dem Druck im ersten Teilraum entgegenwirkt. Auf diese Weise wird der Differenzdruck am Filterelement selbst herabgesetzt, so daß auch die auf das Filterelement wirkenden Kräfte klein gehalten werden können.

Voraussetzung für die Funktion des Hydrauliksystems ist, daß in einer mit dem Zufluß in Verbindung stehenden Zufuhrleitung ein Druckbegrenzerventil angeordnet ist. Wenn sich der am Filtereinlauf anliegende Druck erhöht, wird schließlich der Ansprechdruck dieses Druckbegrenzerventils erreicht, so daß eine entsprechende Flüssigkeitsmenge über dieses Ventil gefördert wird. Durch diese Verlustleistung erwärmt sich das Hydrauliköl, so daß bei einem Kaltstart die notwendige Betriebstemperatur des Hydrauliköls rasch erreicht werden kann. Bei sauberem Filterelement wird also nach einer bestimmten Erwärmung des Mediums der Druckabfall am Filterelement so weit zurückgehen, daß das Differenzdruckbegrenzungsventil im Filter den Ablauf des gefilterten Mediums freigibt.

Wenn dagegen der Anstieg des Differenzdruckes im Filter auf ein verschmutztes Filter zurückzuführen ist, wird das Differenzdruckbegrenzungsventil geschlossen bleiben, d.h. einem
Verbraucher wird kein gereinigtes Medium zugeführt werden.
In diesem Falle muß dann das Filterelement ausgewechselt oder
gereinigt werden.

Vorteilhaft ist es weiterhin, wenn der Ventilkörper des Differenzdruckventils im Filter eine gegenüber dem Querschnitt
der vom Ventilsitz definierten Auslaßöffnung einen kleinen
Querschnitt aufweisende, nicht verschließbare Öffnung aufweist, durch die eine Verbindung zwischen dem zweiten Teilraum und dem Abfluß geschaffen wird. Diese kleine Öffnung
ermöglicht es, daß kaltes Medium, das sich im Inneren des
Filtereinsatzes befindet, abfließen kann, wenn von der Pumpe warmes Medium nachgeliefert werden kann. Auf diese Weise
wird ermöglicht, daß das Differenzdruckbegrenzungsventil im
Filter wieder öffnet, sobald die zum Betrieb notwendige Viskosität des Mediums erreicht ist.

Weitere vorteilhafte Ausgestaltungen sind Gegenstand der Unteransprüche.

Die nachfolgende Beschreibung bevorzugter Ausführungsform der
Erfindung dient im Zusammenhang mit der Zeichnung der näheren Erläuterung. Es zeigen:

   Fig.    1    eine schematische Teilansicht eines teilweise geschnittenen Filters entsprechend
                einem ersten bevorzugten Ausführungsbeispiel;

Fig. 2    eine Teilansicht ähnlich Fig. 1 mit einem geschlossenen Differenzdruckventil;

Fig. 3    eine Ansicht ähnlich Fig. 1 eines weiteren bevorzugten Ausführungsbeispiels mit
          geöffnetem Differenzdruckventil;

Fig. 4    eine Ansicht ähnlich Fig. 3 mit einem geschlossenen Differenzdruckventil    und

Fig. 5    eine schematische Schaltanordnung für
          ein Filter mit Differenzdruckventil.

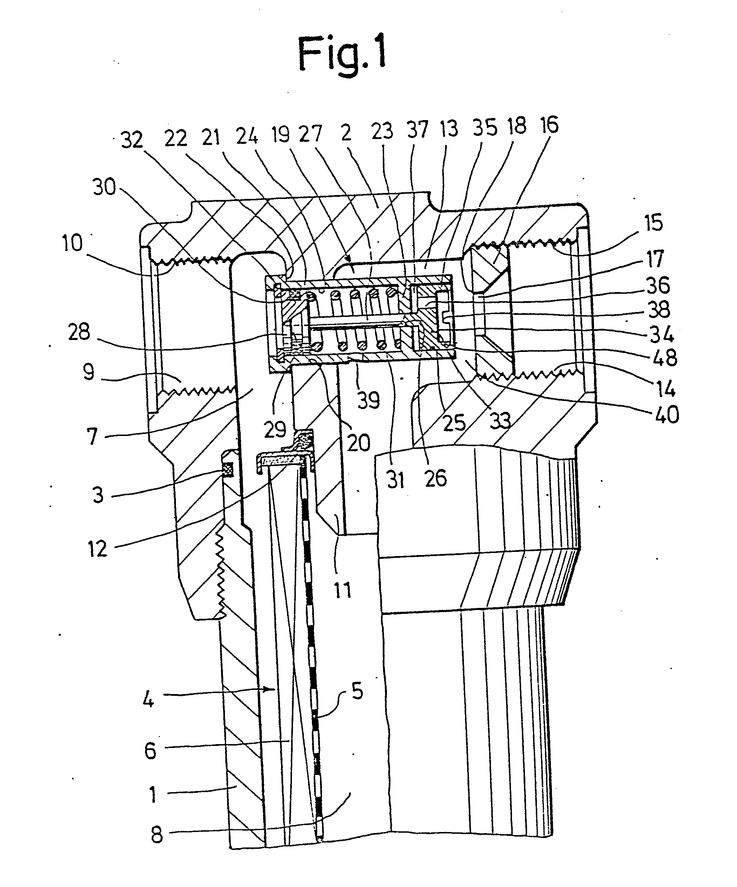

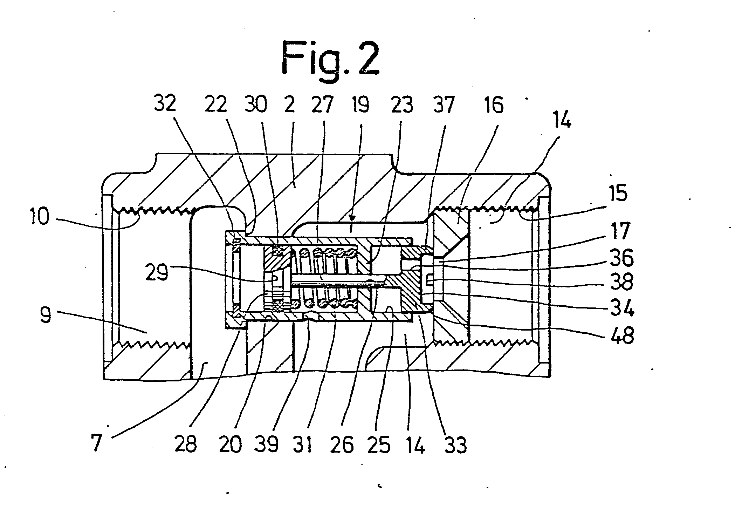

Das in den Figuren 1 und 2 dargestellte Ventil umfaßt ein
topfförmiges Gehäuse 1, auf welches ein Filterkopf 2 aufgeschraubt ist, der gegenüber dem Gehäuse mittels einer O-Ring
dichtung 3 abgedichtet ist. Im Innern des topfförmigen Gehäuses 1 ist ein Filtereinsatz 4 eingesetzt, der in herkömmlicher Weise zylindrisch ausgebildet ist und ein Traggerüst 5
umfaßt, das an der Außenseite von einer ziehharmonikaartig
gefalteten Filterlage 6 umgeben ist. Der Filtereinsatz ist
an der unteren Stirnseite (nicht dargestellt) geschlossen,
an der oberen Stirnseite ist er offen. Er teilt das Innere
des topfförmigen Gehäuses 1 in zwei Teilräume, nämlich einen
ersten außerhalb des Filtereinsatz angeordneten Teilraum 7
und einen zweiten Teilraum 8, der sich im Innern des Filtereinsatzes befindet. Der äußere Teilraum 7 steht mit einer Einlaßbohrung 9 im Filterkopf 2 in Verbindung, die ein Innengewinde 10 zum Einschrauben einer in der Zeichnung nicht dargestellten Zuflußleitung versehen ist.

Der Filterkopf 2 bildet einen nach unten ragenden Rohrstutzen 11 aus, der durch die offene obere Stirnseite des Filtereinsatzes 4 in diesen hineinragt und gegenüber dem Filter mittels einer O-Ringdichtung 12 abgedichtet ist. Dieser Rohrstutzen führt in eine oberhalb des Filtereinsatzes 4 angeordnete, zentrale Auslaßkammer 13 im Filterkopf, die mit einer Auslaßbohrung 14 verbunden ist. Diese Auslaßbohrung trägt wie die Einlaßbohrung 9 ein Innengewinde 15, in welches eine in der Zeichnung nicht dargestellte Auslaßleitung einschraubbar ist. In die Auslaßbohrung 14 ist eine Verschlußplatte 16 mit einer sich zum Auslaß hin konisch erweiternden Durchlaßöffnung 17 eingeschraubt, deren innerer Rand 18 einen Ventilsitz für ein Differenzdruckbegrenzungsventil 19 bildet, welches in einer den ersten Teilraum 7 mit der zentralen Auslaßkammer 13 verbindenden Bohrung 20 angeordnet ist. In diese Bohrung ist von der Einlaßbohrung 9 her eine zylindrische Hülse 21 eingeschoben, deren einlaßseitiges Ende eine sich am Rand der Bohrung 20 abstützende Schulter 22 bildet. Die Hülse 21 wird durch eine Wand 23 in zwei Kammern 24 und 25 unterteilt, wobei die erste Kammer 24 zum ersten Teilraum 7 hin offen ist, während die zweite Kammer 25 zur zentralen Auslaßkammer 13 hin offen ist. In der Wand 23 befindet sich eine zentrale Durchgangsbohrung 26, in der eine Kolbenstange 27 eines Kolbens 28 verschieblich geführt ist, der sich in der ersten Kammer 24 befindet und gegenüber dieser mittels eines in eine Nut 29 des Kolbens 28 eingelegte O-Ringdichtung 30 abgedichtet ist. Zwischen dem Kolben 28 und der Wand 23 ist eine die Kolbenstange 27 umgebende Schraubenfeder 31 angeordnet, die den Kolben 28 in Richtung auf die Einlaßbohrung 9 gegen einen am offenen Ende der Kammer 24 angeordneten Sprengring 32 drückt.

In der zweiten Kammer 25 der Hülse befindet sich ein Ventilkörper 33, der starr mit der Kolbenstange 27 verbunden ist. An seinem freien Ende weist dieser Ventilkörper eine napfförmige Vertiefung 34 auf, deren Rand 35 einen Durchmesser hat, der größer ist als der Durchmesser der Durchlaßöffnung 17 in der Verschlußplatte 16. Die napfförmige Vertiefung 34 steht über eine den Ventilkörper 33 durchsetzende Bohrung 36 mit einem Hohlraum 37 in Verbindung, der durch die Wand 23, die Innenwand der Hülse 21 und die Rückseite des Ventilkörpers 33 gebildet wird. Außerdem befindet sich in dem die Vertiefung 34 umgebenden Rand 35 eine Öffnung 38, die gegenüber dem Querschnitt der Durchlaßöffnung 17 und der Verschlußplatte 16 einen kleinen Querschnitt hat.

Die Kammer 24 steht im Bereich zwischen dem Kolben 28 und der Wand 23 über eine Öffnung 39 mit dem Inneren des Rohrstutzens 11 in Verbindung, so daß der Kolben 28 auf seiner der Einlaßbohrung 9 zugewandten Seite mit dem Druck in der Einlaßbohrung und dem ersten Teilraum beaufschlagt wird, auf seiner Rückseite dagegen vom Druck im Rohrstutzen 11 bzw. in der zentralen Auslaßkammer 13. Der Kolben und damit der über die Kolbenstange starr mit ihm verbundene Ventilkörper 33 sind zwischen zwei Stellungen verschiebbar, nämlich einer in Figur 1 dargestellten Offenstellung, in welcher der Ventilkörper in die Kammer 25 eintaucht und zwischen
dem freien Ende der Hülse 21 und der Verschlußplatte 16 einen Strömungsweg 40 freiläßt, durch den gefiltertes Medium
über den Rohrstutzen und die Auslaßkammer durch die Durchlaßöffnung 17 zur Auslaßbohrung 14 gelangen kann, und einer
zweiten, in Figur 2 dargestellten Schließstellung, in welcher der Rand 35 des Ventilkörpers 33 an der Verschlußplatte 16 anliegt und somit die Durchlaßöffnung 17 verschließt.

Im normalen Betrieb stellt sich beim Filtern zwischen dem
ersten und dem zweiten Teilraum eine bestimmte Druckdifferenz ein, beispielsweise 5 bar. Die Schraubenfeder 31 ist so
dimensioniert, daß bei dieser normalen Druckdifferenz der
Kolben in der  in Figur 1 dargestellten Offenstellung verbleibt, d.h. dieser Differenzdruck reicht nicht aus, den
Kolben gegen die Kraft der Schraubenfeder 31 in die Schließstellung zu verschieben. In diesem Falle ist das Differenzdruckbegrenzungsventil unwirksam, d.h. das gefilterte Medium
gelangt aus dem Inneren des Filtereinsatzes über den Rohrstutzen, die zentrale Auslaßkammer und die Durchlaßöffnung
17 zur Auslaßbohrung 14.

Der Differenzdruck zwischen erstem und zweitem Teilraum
steigt an, wenn das Filter verschmutztist oder wenn die kinematische Viskosität der zu filternden Flüssigkeit zunimmt.
Beim Überschreiten eines bestimmten Differenzdruckwertes
wird der Kolben gegen die Wirkung der Schraubenfeder 31 in

*10*

zunehmendem Maße in Schließstellung verschoben, so daß der
Querschnitt des Strömungsweges 40 zwischen Ventilkörper 33
und Durchlaßöffnung 17 abnimmt. Dadurch steigt der Druck im
Innern des Filtereinsatzes ebenfalls an, d.h. die Druckdifferenz zwischen erstem Teilraum und zweitem Teilraum wird
begrenzt. Dies kann so weit gehen, daß der Ventilkörper die
Durchlaßöffnung 17 vollständig verschließt, wie dies in Figur 2 dargestellt ist. Es kann dann kein gefiltertes Medium
mehr zur Auslaßbohrung 14 gelangen, d.h. der Betrieb der
mit dem flüssigen Medium arbeitenden Vorrichtung wird unterbrochen. Dies ist dann ein Zeichen dafür, daß die Viskosität des Mediums zu hoch ist. oder daß das Filter verschmutzt ist.

Ein vollständiges Verschließen der Durchlaßöffnung 17 tritt
nur ein, wenn die Öffnung 38 im Rand 35 fehlt. Durch diese
Öffnung 38 kann jedoch noch eine geringe Menge des gefilterten Mediums zur Durchlaßöffnung 17 gelangen, d.h. bei einer
Ausführungsform mit der Öffnung 38 wird bei vollständig geschlossenem Ventilkörper zwar eine erhebliche Drosselung
eintreten, aber kein vollständiger Verschluß. Eine solche
Lösung ist dann vorteilhaft, wenn der zu hohe Differenzdruck zwischen erstem und zweitem Teilraum auf die zu hohe
Viskosität des Hydraulikmediums zurückzuführen ist, wie
dies bei tiefen Temperaturen bei Betriebsbeginn häufig der
Fall ist. Wenn nach kurzer Zeit das zu reinigende Medium
die Betriebstemperatur erreicht hat, könnte eine Öffnung
des Differenzdruckbegrenzungsventils normalerweise nur erreicht werden, wenn der Druck an der Einlaßbohrung 9 abgesenkt wird, wenn also eine vorgeschaltete Pumpe abgeschaltet
wird. Durch die Öffnung 38 ist es jedoch möglich, daß das
kalte Medium in Innern des Filtereinsatzes diesen langsam
verlassen kann, so daß dann Medium mit geringerer Viskosität durch das Filter hindurch in den zweiten Teilraum gelangen und diesen allmählich ausfüllen kann. Da dieses erwärmte
Medium eine geringere kinematische Viskosität aufweist, baut
sich an dem Filter auch ein wesentlich geringerer Differenzdruck auf, d.h. es wird nun möglich, daß das Differenzdruckbegrenzungsventil selbständig in die Offenstellung übergeht,
so daß dann das Filter im normalen Betriebszustand (Figur 1)
arbeiten kann.

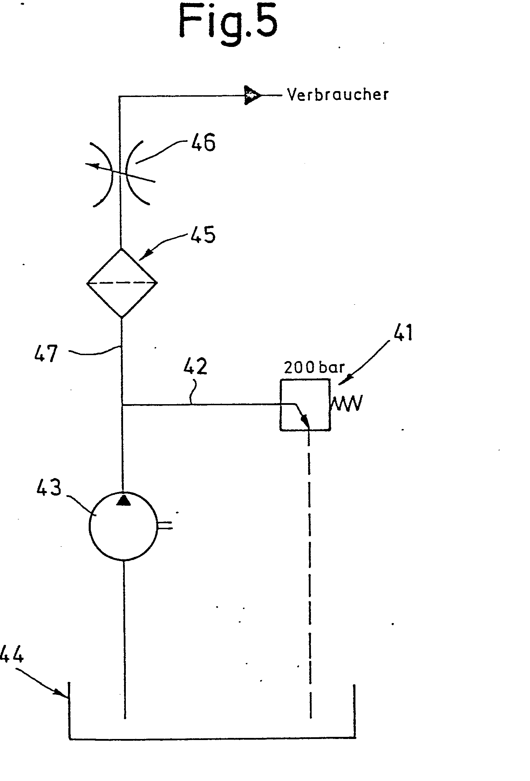

Es ist bei dieser Ausgestaltung vorteilhaft, das Filter in
der in Figur 5 dargestellten Weise einzusetzen. Dabei wird
der Einlaßbohrung des Filters 45 von einer Pumpe 43 das zu
filternde Medium aus einem Vorratsbehälter 44 zugeführt, und
das Filter 45 gibt das gereinigte Medium über eine Drossel
46 an einen Verbraucher ab. Die Drossel 46 wird dabei gebildet durch den Strömungsweg 40, dessen Querschnitt durch den
Ventilkörper 33 veränderbar ist. Die von der Pumpe 43 zum
Filter 45 führende Zuflußleitung 47 steht über eine Rückführleitung 42 mit dem Vorratsbehälter 44 in Verbindung; in diese Rückführleitung 42 ist ein Druckbegrenzungsventil 41 eingeschaltet. Wenn bei tiefen Temperaturen das Medium eine zu
hohe kinematische Viskosität hat und daher die Drossel 46
einen Durchfluß des Mediums durch das Filter 45 unmöglich
macht, steigt der Druck in der Zuflußleitung 47 so weit an,
daß schließlich das Druckbegrenzungsventil 41 öffnet. Die

*12*

Pumpe fördert dann das Medium im Kreislauf, wobei es auf Betriebstemperatur erwärmt wird. Sobald durch diese Kreislaufförderung die Betriebstemperatur des Mediums erreicht ist, kann in der oben erörterten Weise das Differenzdruckventil wieder in die Offenstellung gelangen, d.h. die Drossel 46 setzt den Strömungswiderstand so weit herab, daß das Filter das Medium in der gewünschten Weise zum Verbraucher gelangen läßt. Dadurch fällt auch der Druck in der Zuflußleitung 47 wieder auf Werte ab, die unterhalb des Öffnungsdrucks des Druckbegrenzungsventils 41 liegen, d.h. dieses Ventil schließt.

Insgesamt erhält man durch die Anordnung die Möglichkeit, die Betriebstemperatur des Mediums bei einem Kaltstart in kürzester Zeit zu erreichen, ohne daß dazu zusätzliche Maßnahmen notwendig sind.

Es ist für den Benutzer aus dem Verhalten des Filters bei einem Kaltstart auch ohne weiteres zu sehen, ob der erhöhte Differenzdruck am Filtereinsatz auf die niedrige Temperatur des Mediums oder auf die hohe Verschmutzung des Filters zurückzuführen ist. Beruht der erhöhte Differenzdruck nur auf der niedrigen Temperatur des Mediums, öffnet das Differenzdruckventil nach einiger Zeit, so daß das Filter dann normal arbeitet. Bleibt dagegen eine solche Öffnung aus, liegt die Erhöhung des Differenzdruckes an der Verschmutzung des Filters; es muß dann das Filter gereinigt oder ausgewechselt werden.

*13*

Die Bohrung 36 im Ventilkörper dient dazu, die auf diesen wirkenden Kräfte weitgehend auszugleichen, da durch diese Bohrung die Rückseite des Ventilkörpers mit der Vorderseite in Verbindung steht. Zum Ausgleich des aufgrund der Kolbenstangenfläche entstehenden Kräfteungleichgewichtes ist der Rand 35 mit einer leichten Anfasung 48 versehen, damit bei geschlossener Durchlaßöffnung 17 der Druck in der zentralen Auslaßkammer wirken kann.

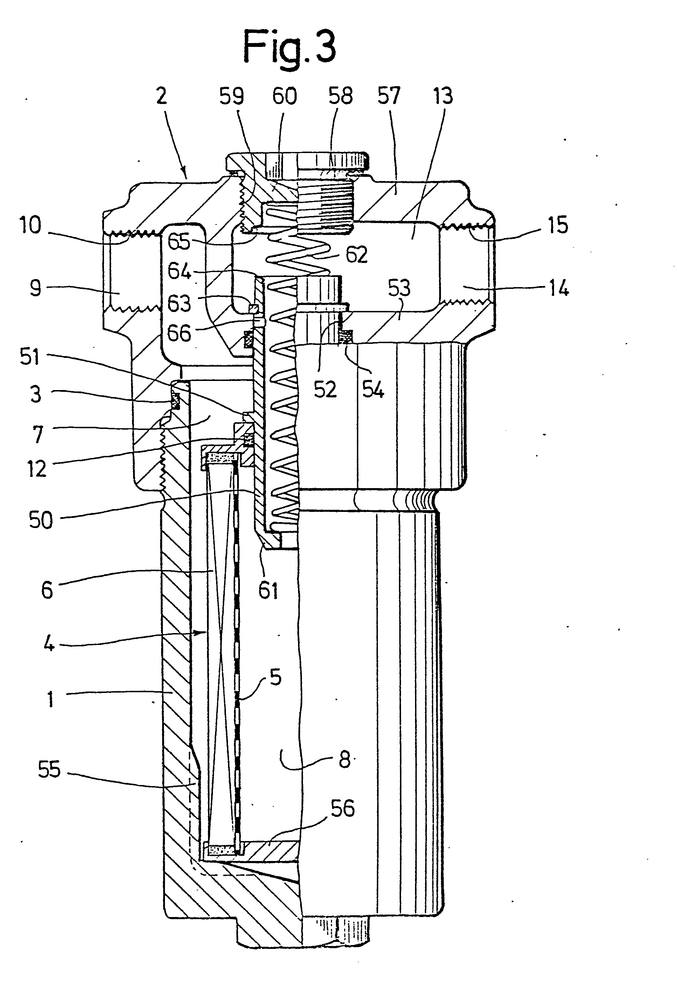

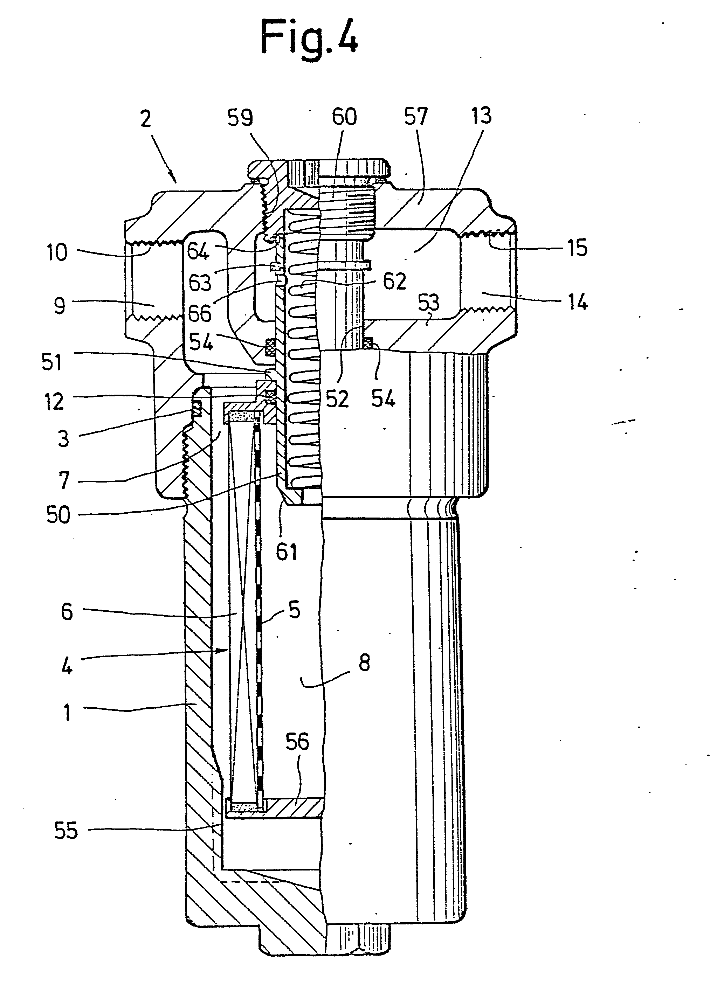

Das in den Figuren 3 und 4 dargestellte Filter ist ähnlich aufgebaut wie das der Figuren 1 und 2, einander entsprechende Teile tragen daher dieselben Bezugszeichen.

Im Unterschied zu dem Filter der Figur 1 ist bei diesem Ausführungsbeispiel kein mit dem Filterkopf fest verbundener oder einstückig ausgebildeter Rohrstutzen 11 vorgesehen, sondern in die offene obere Stirnseite des Filtereinsatzes ragt ein Rohrstück 50 hinein, welches sich auf der Oberseite des Filtereinsatzes mittels einer Schulter 51 abstützt, so daß die Einschubtiefe des Rohrstückes 50 begrenzt ist. Dieses Rohrstück 50 tritt durch eine Bohrung 52 in einer die zentrale Auslaßkammer 13 nach unten hin begrenzenden Wand 53 hindurch und ist gegenüber dieser Wand 53 durch eine O-Ringdichtung 54 abgedichtet. Das Rohrstück 50 ist in dieser Bohrung 52 verschieblich, d.h. es kann mehr oder weniger tief in die zentrale Auslaßkammer 13 eingeschoben werden. Auch der Filtereinsatz 4 ist im Gegensatz zum Ausführungsbeispiel der Figuren 1 und 2 parallel zu seiner Längsachse verschieblich im Gehäuse 1 gelagert, zur Führung sind an

14

der Unterseite des Gehäuses seitliche Führungsrippen 55 vorgesehen, die an der Außenseite des Filtereinsatzbodens 56 anliegen.

Der Bohrung 52 gegenüber ist im Deckel 57 des Filterkopfes eine weitere Bohrung 58 mit einer Innenbohrung 59 angeordnet, in die ein Verschlußstopfen 60 eingeschraubt ist. An diesem und an dem filtereinsatzseitigen Ende 61 des Rohrstückes 50 stützt sich eine Schraubenfeder 62 ab, die sich im Innern des Rohrstückes 50 befindet. Sie verschiebt dadurch das Rohrstück 50 zusammen mit dem Filtereinsatz 4 nach unten, bis das Rohrstück 50 über einen an der Außenseite desselben gehaltenen Sprengring 63 an der Wand 53 zur Anlage gelangt (Figur 3).

Bei dem Ausführungsbeispiel der Figur 3 ist in die Auslaßbohrung 14 keine Verschlußplatte 16 eingeschraubt, d.h. die zentrale Auslaßkammer 13 geht unmittelbar in die Auslaßbohrung 14 über. Außerdem ist bei diesem Ausführungsbeispiel kein dem Differenzdruckbegrenzungsventil 19 vergleichbares Bauteil vorgesehen, da das Rohrstück 50 selbst die Funktion dieses Differenzdruckbegrenzungsventils übernimmt.

Bei der in Figur 3 dargestellten Offenstellung, bei welcher das Rohrstück 50 durch die Schraubenfeder 62 von dem Verschlußstopfen 60 entfernt ist, ergibt sich für das gereinigte Medium aus dem Innern des Filtereinsatzes ein Strömungsweg zur Auslaßbohrung 14, der durch das Rohrstück 50 und die zentrale Auslaßkammer 13 führt. Da sich das verschlußstopfenseitige Ende 64 des Rohrstückes 50 im Abstand vom Verschlußstopfen 60 befindet, kann das Medium ohne weiteres aus dem
Inneren des Rohrstücks 50 in die zentrale Auslaßkammer 13
gelangen. Steigt der Differenzdruck zwischen dem ersten und
dem zweiten Teilraum über das normale Maß hinaus, wird dadurch der gesamte Filtereinsatz 4 nach oben in Richtung auf
den Ventilkopf verschoben, wobei dabei auch das Rohrstück
50 weiter in die zentrale Auslaßkammer 13 eingeschoben wird,
bis dessen Ende 64 schließlich an einer als Ventilsitz ausgebildeten Ringfläche 65 des Verschlußstopfens 60 zur Anlage kommt (Figur 4). Dadurch wird der vom Inneren des Filtereinsatzes zur Auslaßbohrung 14 führende Strömungsweg verschlossen, da das Medium aus dem Inneren des Rohrstücks 50
nicht mehr in die zentrale Auslaßkammer 13 gelangen kann.
Wie im Fall des in den Figuren 1 und 2 dargestellten Ausführungsbeispiels wird somit der Abfluß des Mediums unterbrochen, so daß sich im Innern des Filtereinsatzes ein erhöhter Druck aufbaut, der die Druckdifferenz auffängt. Damit
diese Anordnung ebenso wie die anhand der Figuren 1 und 2 erörterte Anordnung bei einer Erwärmung des Mediums selbstätig
wieder öffnet, ist in dem Rohrstück 50 eine seitliche Bohrung 66 vorgesehen, die in der Schließstellung eine Verbindung vom Inneren des Rohrstückes 50 zur Auslaßkammer 13 herstellt. Diese Bohrung 66 hat jedoch gegenüber dem Strömungsweg im Normalbetrieb einen erheblich geringeren Querschnitt.

Im übrigen arbeitet dieses Filter ebenso wie das anhand der
Figuren 1 und 2 erläuterte Filter, das Druckdifferenzbegrenzungsventil 19 ist ersetzt durch die verschiebliche Bauein-

16

heit aus Filtereinsatz 4 und Rohrstück 50.

Die Ausführungsformen der Figuren 3 und 4 läßt sich besonders leicht montieren und demontieren. Bei abgenommenem Verschlußstopfen 60 kann das Rohrstück 50 durch die Bohrung 58
in die Bohrung 52 eingeschoben werden. Anschließend werden
die Schraubenfeder 62 eingelegt und der Verschlußstopfen 60
eingeschraubt.

Dieser vormontierte Filterkopf kann dann auf das Gehäuse
aufgeschraubt werden,in dem sich der Filtereinsatz befindet. Dabei schiebt man das Rohrstück 50 in die obere, offene Stirnseite des Filtereinsatzes hinein, bis die Schulter 51 an der Oberseite des Filtereinsatzes anliegt.

Wenn man umgekehrt den Filterkopf abschraubt, wird man normalerweise auf diese Weise auch den Filtereinsatz bereits
mit aus dem Gehäuse herausheben können, d.h. der Wechsel
des Filtereinsatzes ist in einfachster Weise dadurch zu bewerkstelligen, daß der alte Filtereinsatz vom Rohrstück 50
abgezogen und ein neuer Filtereinsatz aufgeschoben wird.

0154952

Patentansprüche:

1. Filter mit einem Gehäuse mit einem Zufluß und einem Abfluß für ein zu filterndes Medium, mit einem Filtereinsatz, der den Innenraum des Gehäuses in zwei Teilräume
unterteilt, dessen erster mit dem Zufluß und dessen
zweiter mit dem Abfluß in Verbindung steht, und mit
einem verschieblich gelagerten Ventilkörper, der einerseits von dem Medium im ersten Teilraum und andererseits von dem Medium im zweiten Teilraum beaufschlagbar ist und beim Überschreiten eines bestimmten Differenzdruckes der Medien in den beiden Teilräumen gegen
die Wirkung eines elastischen Kraftspeichers aus einer
Ausgangsstellung heraus verschiebbar ist, mit einem dem
Ventilkörper zugeordneten Ventilsitz, der sich im Strömungsweg vom zweiten Teilraum zum Abfluß befindet, wobei der Ventilkörper in der Ausgangsstellung von dem
Ventilsitz abgehoben ist, während er bei Steigerung
des Differenzdrucks der Medien in den beiden Teilräumen gegen diesen verschoben wird,

-2-

d a d u r c h    g e k e n n z e i c h n e t , daß
der Ventilkörper (36; 50) eine gegenüber der Auslaßöffnung einen kleinen Querschnitt aufweisende, nicht
verschließbare Öffnung (38; 66) aufweist, durch die
eine Verbindung zwischen dem zweiten Teilraum (8)
und dem Abfluß (zentrale Auslaßkammer 13) geschaffen
wird.

2. Filter nach Anspruch 1, dadurch gekennzeichnet, daß
in einer mit der Zuflußleitung (47) in Verbindung
stehenden Rückführleitung (42) ein Druckbegrenzerventil (41) angeordnet ist.

3. Filter nach einem der voranstehenden Ansprüche, dadurch gekennzeichnet, daß der Ventilkörper (33) mit
einem Kolben (28) verbunden ist, der in einer in einer Trennwand zwischen den beiden Teilräumen (7, 8)
angeordneten Hülse (21) abgedichtet verschiebbar ist
und diese in zwei Kammern (24, 25) unterteilt.

4. Filter nach Anspruch 3, dadurch gekennzeichnet, daß
der Ventilkörper (33) ebenfalls in der Hülse (21)
verschiebbar ist und mit dem Kolben (28) über eine
Kolbenstange (27) verbunden ist, die durch eine Öffnung (26) in einer die Kammer (24) des Kolbens (28)
abschließenden Wand (23) hindurchragt.

5. Filter nach Anspruch 4, dadurch gekennzeichnet, daß in dem Ventilkörper (33) ein Kanal (36) mit kleinem Querschnitt angeordnet ist, der einen Hohlraum (37) in der Hülse (21) zwischen der Wand (23) und dem Ventil (33) mit der vom Ventilsitz (Rand 18) definierten Auslaßöffnung (17) verbindet.

6. Filter nach einem der Ansprüche 1 oder 2, dadurch gekennzeichnet, daß der Ventilkörper ein mit dem Filtereinsatz (4) dicht verbundenes und mit dessen Innenraum verbundenes Rohrstück (50) ist, welches abgedichtet durch eine Öffnung (52) in einen mit dem Abfluß in Verbindung stehenden Raum (zentrale Auslaßkammer 13) eintritt und in der Öffnung (52) verschieblich gelagert ist, daß der Filtereinsatz (4) in dem Gehäuse (1) zusammen mit dem Rohrstück (50) verschieblich gelagert ist und von dem ersten Teilraum (7) umgeben ist, daß das Rohrstück (50) mit seinem Rand (Ende 64) den Ventilkörper bildet, daß in dem Raum (zentrale Auslaßkammer 13) ein dem Rand des Rohrstückes (50) gegenüberliegender Ventilsitz (Ringfläche 65) angeordnet ist, der bei Anlage des Rohrstückes (50) das Rohrinnere gegenüber dem Rand (zentrale Auslaßkammer 13) verschließt und daß die nicht verschließbare Öffnung (Bohrung 66) in einem Teil der Seitenwand des Rohrstückes (50) angeordnet ist, der sich bei am Ventilsitz (Ringfläche 65) anliegendem Rohrstück (50) in dem Raum (zentrale Auslaßkammer 13) befindet.

-4-

7. Filter nach Anspruch 6, dadurch gekennzeichnet, daß eine das Rohrstück (50) und den Filtereinsatz (4) vom Ventilsitz (Ringfläche 65) wegdrückende Feder (62) vorgesehen ist.

8. Filter nach einem der Ansprüche 6 oder 7, dadurch gekennzeichnet, daß das Rohrstück (50) eine radial abstehende Schulter (51) trägt, die am Filtereinsatz (4) anliegt und die Einschubtiefe des Rohrstückes (50) in den Filtereinsatz (4) begrenzt.

# Fig.1

# Fig. 2

# Fig.3

# Fig.4

# Fig.5

Verbraucher

46

45

47

42    200 bar    41

43

44